# EUROPEAN PATENT APPLICATION

(11) **EP 3 306 049 A1**
(43) Date of publication of application: **11.04.2018**
(21) Application number: 16203773.3
(22) Date of filing: 13.12.2016
(51) Int. Cl.: F02B 37/04, F01N 13/10, F02B 39/10

(54) **ENGINE SYSTEM**

(30) Priority: 06.10.2016 KR 20160129257
(71) Applicant: Hyundai Motor Company, Seoul 06797 (KR)
(72) Inventor: HAN, Dong Hee, 00000 Seoul (KR); PARK, Jong Il, 00000 Seoul (KR); HONG, Seungwoo, 00000 Seoul (KR); LEE, Hyungbok, 00000 Gyeonggi-do (KR); LEE, Joowon, 00000 Gyeonggi-do (KR); CHU, Dong Ho, 00000 Gyeonggi-do (KR); LIM, Hyun Jun, 00000 Incheon (KR)
(74) Representative: Isarpatent

(57) **Abstract**

An engine system may include: an engine including a plurality of cylinders generating driving torque by combustion of fuel; a first exhaust manifold connected to some of cylinders of the plurality of cylinders; a second exhaust manifold connected to remaining cylinders of the plurality of cylinders; a turbocharger including a turbine rotated by exhaust gas that is exhausted from the first exhaust manifold and a compressor rotated together with the turbine and compressing air supplied to the cylinders; and an supercharger including a motor and an compressor operated by the motor in order to supply compressed air to the cylinders.

## Description

### BACKGROUND

### (a) Field of the Disclosure

The present disclosure relates to an engine system and more particularly, to an engine system that can realize a high compression ratio by reducing exhaust interference and that can improve fuel consumption at middle-load and high-load operating regions or parameters.

### (b) Description of the Related Art

An engine mixes air and fuel and generates driving power by burning the air-fuel mixture.

To obtain required output power and combustion efficiency, sufficient air should be supplied to the engine. For supplying air, a turbocharger is often used to increase combustion efficiency and supply sufficient air to the engine.

A turbine of the turbocharger is rotated by pressure of exhaust gas that is exhausted from the engine. A compressor of the turbocharger compresses fresh air flowing in from the outside. The compressed air is supplied to a cylinder of the engine. Turbochargers have been applied to most diesel engines, and have more recently been applied to gasoline engines.

A turbocharger includes a waste gate valve that adjusts an exhaust gas amount supplied to the turbine from the engine. However, the waste gate valve used on turbochargers are very expensive.

Electric superchargers have been developed that compress external or outside air using a compressor operated by a motor. Since an electric supercharger is operated by the motor, there is little turbo lag. An electric supercharger mainly supplies compressed air to the cylinders of the engine in a low-speed and low-load operating parameter or region.

A turbocharger (hereinafter referred to as a 'mechanical turbocharger'), which is operated by exhaust gas pressure has low responsiveness. Also, use of a mechanical turbocharger results in a problem, because of high back pressure, in realizing an engine having a high compression ratio.

Further, since the output power of the motor is limited according to an output of a battery provided in a vehicle, the usage of the electric supercharger is limited to low-speed and middle-speed operating parameters or regions.

Further, in a typical multi-cylinder engine, exhaust interference is generated in which exhaust gas that is exhausted from one of the cylinders influences another cylinder. Therefore, a residual exhaust gas amount in the cylinders is increased by the exhaust interference making it difficult to realize an engine having a high compression ratio.

The above information disclosed in this Background section is only to enhance understanding of the background of the disclosure. Therefore, the Background section may contain information that would not be considered as prior art to a person of ordinary skill in the art.

### SUMMARY

The present disclosure provides an engine system that can minimize exhaust interference.

Further, the present disclosure provides a new engine system that has both a mechanical turbocharger that is operated by exhaust gas and an electric supercharger that is operated by a motor.

According to an embodiment of the present disclosure, an engine system may include: an engine including a plurality of cylinders generating driving torque by combustion of fuel; a first exhaust manifold connected to a part of cylinders of the plurality of cylinders; a second exhaust manifold connected to the remaining cylinders of the plurality of cylinders; a turbocharger including a turbine rotated by exhaust gas, which is exhausted from the first exhaust manifold and a compressor rotated together with the turbine and compressing air supplied to the cylinders; and a supercharger including a motor and a compressor, which is operated by the motor to supply compressed air to the cylinders.

The turbine may be disposed at, in, or along a first exhaust line through which exhaust gas flows having been discharged from the first exhaust manifold. An exhaust gas purification apparatus may be disposed at a portion where the first exhaust line and a second exhaust line are joined. Exhaust gas flows through the second exhaust line, the exhaust gas having been discharged from the second exhaust manifold.

The cylinders may be in a four-cylinder engine in which a first cylinder, a second cylinder, a third cylinder, and a fourth cylinder are sequentially disposed. The second cylinder and the third cylinder may be connected to the first exhaust manifold, and the first cylinder and the fourth cylinder may be connected to the second exhaust manifold.

The cylinders may be in a four-cylinder engine in which a first cylinder, a second cylinder, a third cylinder, and a fourth cylinder are sequentially disposed. The second cylinder and the third cylinder may be connected to the second exhaust manifold, and the first cylinder and the fourth cylinder may be connected to the first exhaust manifold.

The compressor of the turbocharger and the electric supercharger may be disposed at, in or along an intake line into which fresh air flows. An intercooler for cooling the fresh air may be disposed at, in, or along the intake line.

A bypass line may be disposed at, in, or along the intake line for bypassing a part of the air, which is supplied to the electric supercharger. A bypass valve may be disposed at, in, or along the bypass line.

An engine torque may be adjusted by an amount that the bypass valve is open, an amount of supercharged air from the electric supercharger, and an amount that the throttle valve is open in low-speed and middle-speed operating parameters or regions.

An engine torque may also be adjusted by an amount that the throttle valve is open in a high-speed operating parameter or region.

The engine system may further include a low-pressure exhaust gas recirculation (EGR) system. The low-pressure EGR system may include a low-pressure EGR line branched off from an exhaust line at a rear end of the turbine and joined to an intake line at a front end of the compressor. The low-pressure EGR system may also have a low-pressure EGR cooler disposed in the low-pressure EGR line and a low-pressure EGR valve disposed in the low-pressure EGR line.

The engine system may further include a high-pressure EGR system. The high-pressure EGR system may include a high-pressure EGR line branched off from an exhaust line at a rear end of the turbine and joined to an intake line at a rear end of the electric supercharger. The high -pressure EGR system may also have a high-pressure EGR cooler disposed in the high-pressure EGR line and a high-pressure EGR valve disposed in the high-pressure EGR line.

According to an embodiment of the present disclosure, exhaust gas having been discharged from some of the cylinders operate a turbocharger. Exhaust gas having been discharged from the remaining cylinders is directly discharged to an exhaust gas purification apparatus. Thus, back pressure can be reduced and a high compression ratio can be realized.

Further, exhaust gas having been discharged from some of the cylinders operates a turbocharger. Exhaust gas having been discharged from the remaining cylinders is directly discharged to an exhaust gas purification apparatus. Thus, the need for a very expensive waste gate valve can be eliminated.

### BRIEF DESCRIPTION OF THE DRAWINGS

The drawings are provided for reference in describing embodiments of the present disclosure. The spirit of the present disclosure should not be construed only by the accompanying drawings.
FIG. 1 is a schematic view illustrating an engine system according to an embodiment of the present disclosure.
FIG. 2 is a graph illustrating an operating region of the engine system according to an embodiment of the present disclosure.
FIG. 3 is a schematic view to help explain a principle of reducing exhaust interference according to an embodiment of the present disclosure.
FIG. 4 is a schematic view illustrating an engine system according to another embodiment of the present disclosure.

### DETAILED DESCRIPTION OF THE EMBODIMENTS

The present disclosure is described more fully hereinafter with reference to the accompanying drawings, in which embodiments of the disclosure are shown. As those having ordinary skill in the art will realize, the described embodiments may be modified in various different ways, all without departing from the spirit or scope of the present disclosure.

In describing the disclosed engine system, parts that are not related to the description will be omitted. Like reference numerals generally designate like elements throughout the specification. The reference numbers in the drawings are utilized as follows:
- 10 -: engine
- 11 -: first cylinder
- 12 -: second cylinder
- 13 -: third cylinder
- 14 -: fourth cylinder
- 20 -: controller
- 30 -: main exhaust line
- 31 -: first exhaust manifold
- 33 -: first exhaust line
- 35 -: second exhaust manifold
- 37 -: second exhaust line
- 40 -: turbocharger
- 41 -: turbine
- 43 -: compressor
- 50 -: electric supercharger
- 51 -: motor
- 53 -: electric compressor
- 60 -: intake line
- 62 -: bypass line
- 64 -: throttle valve
- 66 -: bypass valve
- 67 -: intercooler
- 68 -: air cleaner
- 70 -: intake manifold
- 80 -: exhaust gas purification apparatus
- 90 -: low-pressure EGR system
- 92 -: EGR line
- 94 -: EGR cooler
- 96 -: EGR valve
- 100 -: high-pressure EGR system
- 102 -: EGR line
- 104 -: EGR cooler
- 106 -: EGR valve

In addition, the size and thickness of each configuration shown in the drawings are arbitrarily shown for better understanding and ease of description. However, the present disclosure is not limited thereto. In the drawings, the thickness of layers, films, panels, regions, etc., are exaggerated for clarity.

Hereinafter, an engine system according to an embodiment of the present disclosure is described in detail with reference to the accompanying drawings.

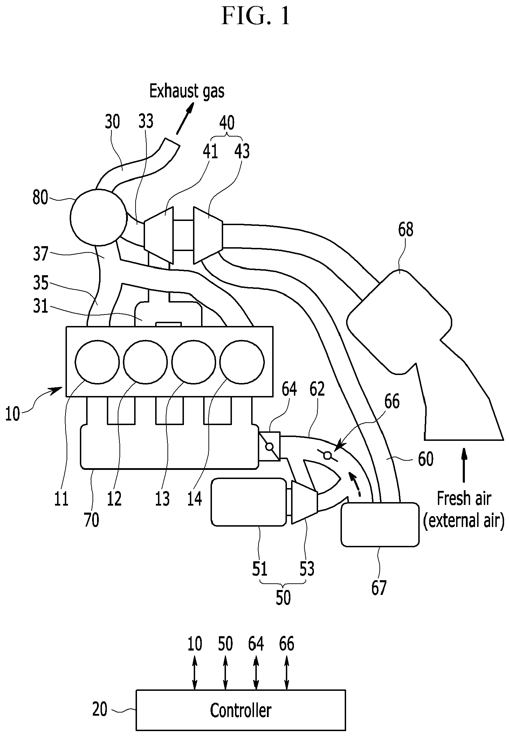

FIG. 1 is a schematic view illustrating an engine system according to an embodiment of the present disclosure. As used herein, the phrase "disposed at" is meant to generally indicate that one component is positioned and arranged relative to another component so that it can function and operate as intended. The one component may be within the other component, adjacent the other component, alongside the other component, in line with the other component, or otherwise in communication with the other component. Use of the phrase is not intended to limit the way in which the components are assembled or interact relative to one another.

As shown in FIG. 1, the engine system includes: an engine 10 having a plurality of cylinders generating driving torque by combustion of fuel; a turbocharger 40 supplying compressed air to the cylinders; an electric supercharger 50 supplying compressed air to the cylinders, the supercharger 50 being operated by a motor 51; and an exhaust manifold connected to the cylinders.

The engine 10 may be a four-cylinder engine having four cylinders. The plurality of cylinders, that is, a first cylinder 11, a second cylinder 12, a third cylinder 13, and a fourth cylinder 14, are sequentially disposed.

The exhaust manifold includes a first exhaust manifold 31 connected to a part of or some of the plurality of cylinders and a second exhaust manifold 35 connected to the remaining cylinders of the plurality of cylinders.

In one embodiment, the first exhaust manifold 31 may be connected to the second cylinder 12 and the third cylinder 13. The second exhaust manifold 35 may be connected to the first cylinder 11 and the fourth cylinder 14.

In another embodiment, the second exhaust manifold 35 may instead be connected to the second cylinder 12 and the third cylinder 13. The first exhaust manifold 31 may instead be connected to the first cylinder 11 and the fourth cylinder 14.

The first exhaust manifold 31 is connected to a first exhaust line 33, and the second exhaust manifold 35 is connected to a second exhaust line 37. The first exhaust line 33 and the second exhaust line 37 are joined at a main exhaust line 30. An exhaust gas purification apparatus 80 for purifying exhaust gas is disposed at the main exhaust line 30 where the first exhaust line 33 and the second exhaust line 37 are joined.

The turbocharger 40 supplies compressed air to the cylinders. The turbocharger 40 includes a turbine 41 that is rotated by exhaust gas having been discharged from the cylinders. The turbocharger 40 also has a compressor 43 that is rotated by a rotation force of the turbine and that compresses intake air. The turbine 41 is disposed at, in, or along the first exhaust line 33 and is operated by exhaust gas, which is exhausted through the first exhaust manifold 31.

The electric supercharger 50 for supplying compressed air to the cylinders includes the motor 51 and an electric compressor 53. The electric compressor 53 is operated by the motor 51 and compresses intake air. The compressed intake air is supplied to the cylinders.

The compressor 43 of the turbocharger 40 and the electric supercharger 50 are disposed at, in, or along an intake line 60 into which external our outside air flows. An air cleaner 68 is disposed at an inlet of the intake line 60 for filtering the external air. An intercooler 67 is disposed at, in, or along the intake line 60 for cooling air compressed by the turbocharger 40.

The compressor 43 of the turbocharger 40 is disposed at, in, or along an upstream side of the intake line 60, and the electric supercharger 50 is disposed at, in, or along a downstream side of the intake line 60. The external air flowing through the intake line 60 is supplied to the cylinders through an intake manifold 70. A throttle valve 64 is mounted at the intake manifold 70. An air amount that is supplied to the cylinders is adjusted by an opening of the throttle valve 64.

A bypass line 62 is disposed at, in, or along the intake line 60. The bypass line 62 bypasses a part of the external air supplied to the electric supercharger 50. A bypass valve 66 is disposed at, in, or along the bypass line 62. An amount of air supplied by the electric supercharger 50 is adjusted by an amount that the bypass valve 66 is open.

The engine system according to an embodiment of the present disclosure may further include an EGR system. The EGR system is a system mounted in a vehicle to reduce deleterious exhaust gas.

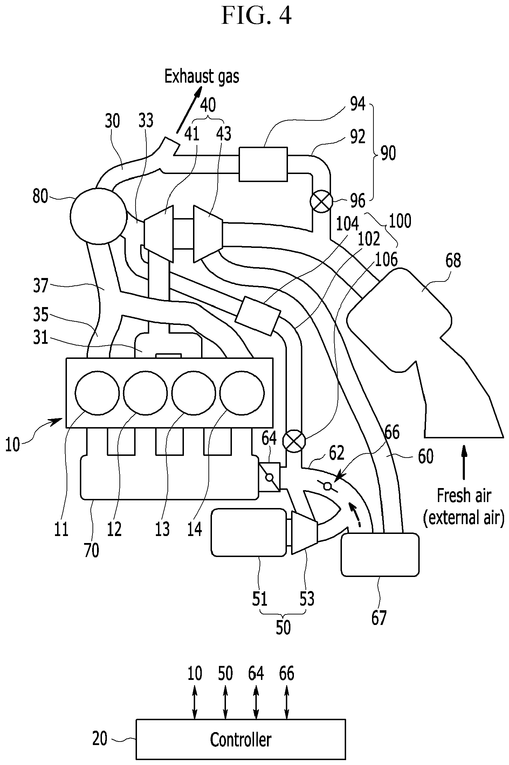

Referring to FIG. 4, as a representative exhaust gas recirculation or EGR system, the engine system includes a low-pressure EGR system 90 and a high-pressure EGR system 100.

The low-pressure EGR system 90 may include a low-pressure EGR line 92 branched off from the exhaust line 30 at a rear end of the turbine 41 and joined to the intake line 60 at a front end of the compressor 43. The low-pressure EGR system 90 may also include a low-pressure EGR cooler 94 disposed in the low-pressure EGR line 92 and a low-pressure EGR valve 96 disposed in the low-pressure EGR line 92.

The high-pressure EGR system 100 may include a high-pressure EGR line 102 branched off from the first exhaust line 33 at a rear end of the turbine 41 and joined to the intake line 60 at a rear end of the electric supercharger 50. The high-pressure EGR system 100 may also include a high-pressure EGR cooler 104 disposed in the high-pressure EGR line 102 and a high-pressure EGR valve 106 disposed in the high-pressure EGR line 102.

Hereinafter, an operation of the engine system according to an embodiment of the present disclosure is described in detail with reference to accompanying drawings.

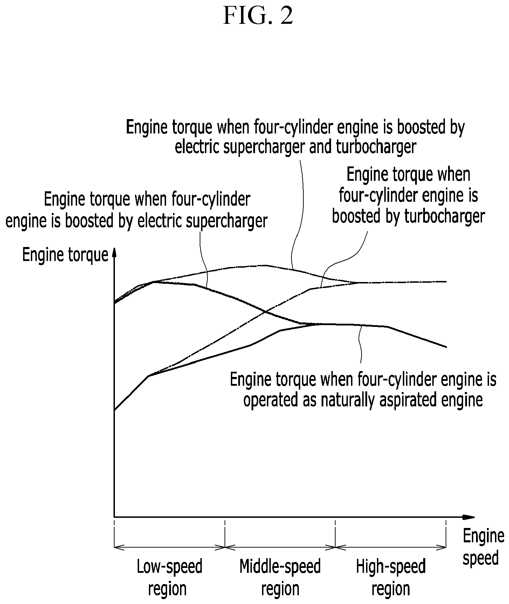

FIG. 2 is a graph illustrating operating regions or parameters of the engine system according to an embodiment of the present disclosure. In FIG. 2, a horizontal axis denotes an engine rotation speed and a vertical axis denotes an engine torque.

In FIG. 2, a solid line denotes an engine torque when the four-cylinder engine is operated as a naturally aspirated engine. A dotted line denotes an engine torque when the four-cylinder engine is boosted by the electric supercharger 50. A one-point chain line denotes an engine torque when the four-cylinder engine is boosted by the turbocharger 40. A two-point chain line denotes an engine torque when the four-cylinder engine is boosted by the electric supercharger 50 and the turbocharger 40.

Referring to FIG. 2, since the exhaust gas amount that is exhausted from the second cylinder 12 and the third cylinder 13 is not large when the engine speed is relatively low (low-speed region), the boosting by the turbocharger 40 is limited.

Therefore, the air compressed by the electric supercharger 50 is supplied to the cylinders. The engine torque according to the engine speed is adjusted by an amount that the bypass valve 66 is open, the amount of compressed air provided by the electric supercharger 50, and an amount that the throttle valve 64 is open when a driving region is in the low-speed region. The bypass valve 66, the throttle valve 64, and the electric supercharger 50 may be controlled by a controller 20 (for example, an engine control unit (ECU)) provided in a vehicle.

The controller 20 is or has at least one microprocessor, which executes a predetermined program and/or has hardware which includes the microprocessor. The predetermined program may be formed of a series of commands, which perform a method for controlling the engine according to an embodiment of the present disclosure, which is described below.

Also, since the exhausted gas that is exhausted from the first cylinder 11 and the fourth cylinder 14 is exhausted to the main exhaust line 30 through the second exhaust manifold 35 and the second exhaust line 37 without passing through the turbocharger 40, a back pressure may be reduced. Accordingly, the compression ratio of the first cylinder 11 and the fourth cylinder 14 may be increased such that the fuel consumption may be improved.

The turbocharger 40 is operated by the exhaust gas that is exhausted from the first cylinder 11 and the fourth cylinder 14. The air compressed by the turbocharger 40 is supplied to the cylinders in a middle-speed region in which a rotation speed of the engine is relatively fast compared to the low-speed region. Also, the air compressed by the electric supercharger 50 is supplied to the cylinders.

The compressed air that is compressed by the turbocharger 40 and the electric supercharger 50 is supplied to the cylinders. The engine torque is adjusted by the amount that the bypass valve 66 is open, the amount of compressed air provided by the electric supercharger 50, and the amount that the throttle valve 64 is open in the middle-speed region.

The turbocharger 40 is operated by the exhaust gas that is exhausted from the first cylinder 11 and the fourth cylinder 14. The compressed air that is compressed by the turbocharger 40 is supplied to the cylinders in a high-speed region in which the rotation speed of the engine is relatively fast compared to the middle-speed region.

The compressed air is supplied to the cylinders by the turbocharger 40, but the air compressed by the electric supercharger 50 is not supplied to the cylinders in the high-speed region. The engine torque is adjusted by the amount that the throttle valve 64 is open in the high-speed region.

According to a conventional turbocharger, a problem occurs where the turbine wheel is overloaded because a supply amount of exhaust gas is increased in the high-speed region and rotation speed of a turbine wheel 42 of the turbine 41 deviates from a predetermined tolerance limit. To solve the above problem in a conventional turbocharger, exhaust gas that is discharged from the cylinders is bypassed using a waste gate valve. About half of the exhaust gas discharged from the four cylinders is diverted or rerouted from the turbine 41.

However, according to an embodiment of the present disclosure, there is no need to bypass exhaust gas suppled to the turbine 41 of the turbocharger 40 in the high-speed region since the two cylinders (second cylinder 12 and third cylinder 13) are connected to the turbine 41 of the turbocharger 40. Therefore, it is possible to eliminate the waste gate valve used in a conventional turbocharger 40. Thus, the manufacturing cost of the vehicle can be reduced.

Further, although the waste gate valve is removed, engine output can be obtained in the high-speed region. The engine torque is adjusted by the electric supercharger. A waste gate valve does not need to be controlled in low-speed and middle-speed regions, and thus it is possible to ensure stability.

Hereinafter, a method for reducing exhaust interference by the engine system according to an embodiment of the present disclosure is described in detail.

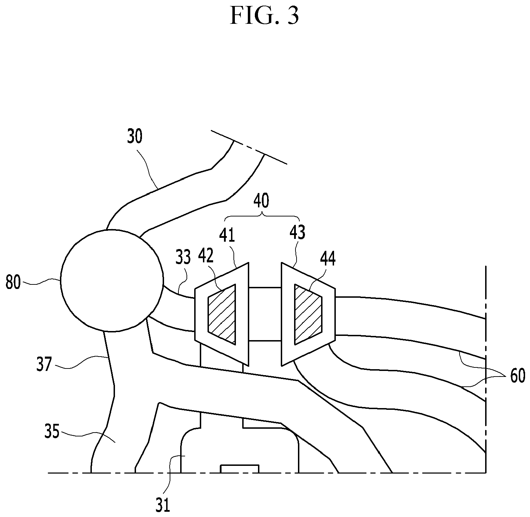

FIG. 3 is a schematic view explaining a principle of reducing exhaust interference according to an embodiment of the present disclosure.

Referring to FIG. 3, the exhaust manifold is divided into the first exhaust manifold 31 and the second exhaust manifold 35..

The exhaust gas that is exhausted from the second cylinder 12 and the third cylinder 13 (hereinafter referred to as 'first exhaust gas') is exhausted to the main exhaust line 30 after passing through the first exhaust manifold 31 and the first exhaust line 33. The exhaust gas that is exhausted from the first cylinder 11 and the fourth cylinder 14 (hereinafter referred to as 'second exhaust gas') is exhausted to the exhaust line 30 after passing through the second exhaust manifold 35 and the second exhaust line 37.

Interference of the first exhaust gas and the second exhaust gas can be prevented since a flow channel (second exhaust line) of the first exhaust gas and a flow channel (first exhaust line) of the second exhaust gas are physically separated by the turbine wheel 42 of the turbine 41.

In other words, the second exhaust gas cannot flow backward to the second cylinder and the third cylinder because of the turbine wheel 42. Thus, it is possible to prevent interference by the second exhaust gas to the second cylinder 12 and the third cylinder 13.

Further, The flow channel (second exhaust line) of the first exhaust gas and the flow channel (first exhaust line) of the second exhaust gas may not be perfectly separated by the turbine wheel 42. However, the exhaust gas purification apparatus 80 functions as a kind of resonator when the first exhaust gas flows into the first cylinder 11 and the fourth cylinder 14 through the exhaust gas purification apparatus 80 and the turbine wheel 42, or when the second exhaust gas flows into the second cylinder 12 and the third cylinder 13 through the exhaust gas purification apparatus 80 and the turbine wheel 42.

The first exhaust gas and the second exhaust gas are exhausted as a kind of a pulsation. A magnitude of the pulsation of the first exhaust gas and the second exhaust gas is reduced by the exhaust gas purification apparatus 80 when the first exhaust gas flows into the first cylinder 11 and the fourth cylinder 14 after passing through the exhaust gas purification apparatus 80 and the turbine wheel 42, or when the second exhaust gas flows into the second cylinder 12 and the third cylinder 13 after passing through the exhaust gas purification apparatus 80 and the turbine wheel 42. Therefore, the interference of the first exhaust gas in the first cylinder 11 and the fourth cylinder 14 and/or the interference of the second exhaust gas in the second cylinder 12 and the third cylinder 13 can be minimized.

While the disclosed embodiments have been described in connection with what is presently considered to be practical embodiments, it is to be understood that the disclosure is not limited to the disclosed embodiments, but, on the contrary, is intended to cover various modifications and equivalent arrangements included within the spirit and scope of the appended claims.

## Claims

1. An engine system comprising:
an engine including a plurality of cylinders generating driving torque by combustion of fuel;
a first exhaust manifold connected to some cylinders of the plurality of cylinders;
a second exhaust manifold connected to remaining cylinders of the plurality of cylinders;
a turbocharger including a turbine rotated by exhaust gas that is exhausted from the first exhaust manifold and a compressor rotated together with the turbine and compressing air supplied to the cylinders; and
a supercharger including a motor and a compressor operated by the motor to supply compressed air to the cylinders.

2. The engine system of claim 1, wherein,
the turbine is disposed at a first exhaust line through which exhaust gas flows having been discharged from the first exhaust manifold, and
an exhaust gas purification apparatus is disposed at a portion where the first exhaust line and a second exhaust line join, wherein exhaust gas flows through the second exhaust line having been discharged from the second exhaust manifold.

3. The engine system of claim 1, wherein,
the cylinders are in a four-cylinder engine in which a first cylinder, a second cylinder, a third cylinder, and a fourth cylinder are sequentially disposed, and
the second cylinder and the third cylinder are connected to the first exhaust manifold, and the first cylinder and the fourth cylinder are connected to the second exhaust manifold.

4. The engine system of claim 1, wherein,
the cylinders are in a four-cylinder engine in which a first cylinder, a second cylinder, a third cylinder, and a fourth cylinder are sequentially disposed, and
the second cylinder and the third cylinder are connected to the second exhaust manifold, and the first cylinder and the fourth cylinder are connected to the first exhaust manifold.

5. The engine system of claim 1, further comprising:
an intake line into which fresh air flows, the compressor of the turbocharger and the supercharger being disposed at the intake line; and
an intercooler disposed at the intake line for cooling the fresh air.

6. The engine system of claim 5, further comprising:
a bypass line disposed at the intake line for bypassing a portion of a flow of air supplied to the supercharger; and
a bypass valve disposed at the bypass line.

7. The engine system of claim 6, wherein
an engine torque is adjusted by an amount that the bypass valve is open, an amount of supercharged air from the supercharger, and an amount that the throttle valve is open in low-speed and middle-speed regions.

8. The engine system of claim 6, wherein
an engine torque is adjusted by an amount that the throttle valve is open in a high-speed region.

9. The engine system of claim 1, further comprising:
a low-pressure EGR system including i) a low-pressure EGR line branched off from an exhaust line at a rear end of the turbine and joined to an intake line at a front end of the compressor, ii) a low-pressure EGR cooler disposed in the low-pressure EGR line, and iii) a low-pressure EGR valve disposed in the low-pressure EGR line.

10. The engine system of claim 1, further comprising:
a high-pressure EGR system including i) a high-pressure EGR line branched off from an exhaust line at a rear end of the turbine and joined to an intake line at a rear end of the supercharger, ii) a high-pressure EGR cooler disposed in the high-pressure EGR line, and iii) a high-pressure EGR valve disposed in the high-pressure EGR line.
